Europäisches Patentamt

European Patent Office (11) Numéro de publication: **0 026 470**

Office européen des brevets A2

(12) **DEMANDE DE BREVET EUROPEEN**

(21) Numéro de dépôt: 80105816.5

(22) Date de dépôt: 26.09.80

(51) Int. Cl.³: **B 60 K 41/04**
F 16 H 5/66

(30) Priorité: 01.10.79 FR 7924427

(43) Date de publication de la demande:
08.04.81 Bulletin 81/14

(84) Etats Contractants Désignés:
DE GB IT NL SE

(71) Demandeur: REGIE NATIONALE DES USINES RENAULT
Boite postale 103 8-10 avenue Emile Zola
F-92109 Boulogne-Billancourt(FR)

(72) Inventeur: Baudoin, Patrice
24, rue J. Tourguenieff
F-78380 Bougival(FR)

(74) Mandataire: Casalonga, Axel
Bureau D.A.Casalonga Lilienstrasse 77
D-8000 München 80(DE)

(54) Procédé de régulation d'un groupe motopropulseur et dispositif permettant sa mise en oeuvre.

(57) Procédé de régulation d'un groupe motopropulseur et dispositif permettant sa mise en oeuvre.

Le dispositif de régulation comprend une unité logique 8 recevant des informations à partir le capteurs 6 et 7 sur la position de la pédale d'accélérateur et la vitesse du véhicule et agissant par l'intermédiaire des actionneurs 9 sur le moteur thermique et la transmission. L'unité logique détermine à tout instant un rapport de transmission optimalisé en fonction d'un critère déterminé et provoque l'engagement de ce rapport optimal uniquement si le gain résultant par rapport au critère d'optimalisation est supérieur à une valeur déterminée. Selon un autre aspect de l'invention, on maintient par verrouillage un rapport de transmission engagé même s'il est différent du rapport de transmission optimal ainsi déterminé. Cette commande de verrouillage peut être effectuée par le levier de sélection ou en détectant un mouvement important de la pédale d'accélérateur.

FIG.2

Procédé de régulation d'un groupe motopropulseur et dispositif permettant sa mise en oeuvre.

La présente invention due à la collaboration de Monsieur Patrice Baudoin est relative à un procédé de régulation d'un groupe motopropulseur de véhicule automobile permettant une gestion automatique optimalisée de ce groupe motopropulseur. Le groupe motopropulseur de véhicule automobile comprend d'une part un moteur thermique et d'autre part une transmission reliée au moteur thermique directement ou indirectement par l'intermédiaire d'un organe tel qu'un embrayage, un coupleur, un convertisseur de couple ou un organe équivalent.

La présente invention permet d'assurer un fonctionnement optimalisé du groupe motopropulseur selon un critère déterminé tel que par exemple une consommation d'énergie minimale, une pollution minimale, un bruit minimal ou une combinaison de ces différents critères. L'invention permet en outre au conducteur d'intervenir volontairement sur la transmission en maintenant un rapport de transmission existant à un moment donné et/ou en provoquant l'établissement d'un rapport inférieur.

Le moteur thermique peut être par exemple un moteur à allumage commandé, un moteur Diesel, un moteur Sterling, un moteur Rankine, une turbine à gaz etc.... D'une manière générale le procédé de l'invention peut être appliqué à tout dispositif moteur utilisant la combustion d'un carburant alimenté depuis l'extérieur. La transmission utilisable dans le procédé de l'invention permet l'établissement de plusieurs rapports de transmission. Une telle transmission présente en général une position neutre dite de point mort, un rapport de marche arrière et plusieurs rapports de transmission définissant différentes vitesses de marche avant. La transmission présente généralement plusieurs rapports discrets ou étagés. En variante on peut également utiliser une transmission à variateur établissant une plage continue de rapports de transmission.

On connaît de longue date des groupes motopropulseurs consistant en un moteur thermique conventionnel associé à une boîte de vitesses automatique comportant un ou plusieurs trains d'engrenages épicycloïdaux et munie d'un convertisseur de couple hydrocinétique ou d'un coupleur. De tels dispositifs généralement simples et fiables ne permettent pas cependant d'assurer par eux-mêmes un fonctionnement optimalisé en fonction d'un critère déterminé tel que les critères précités. Par ailleurs ces dispositifs présentent un fonctionnement relativement rigide ne s'adaptant que difficilement aux différentes conditions variables de circulation que le véhicule est amené à rencontrer. Il en résulte que le conducteur du véhicule est amené à intervenir fréquemment sur un organe de commande de la transmission ou un levier de sélection des modes de fonctionne ment afin d'imposer par exemple momentanément un rapport de transmission différent de celui qui est automatiquement établi par la transmission. Dans ce but les leviers sélecteurs de tels dispositifs de type connu comprennent en général les positions suivantes :

R correspondant à la marche arrière;

N correspondant au point neutre ou point mort;

A correspondant à la marche avant en fonctionnement automatique;

2 correspondant à la deuxième vitesse imposée, la troisième vitesse étant si possible interdite compte tenu de la vitesse du véhicule; et

1 correspondant à la première vitesse imposée, les deuxième et troisième vitesses étant si possible interdites (dans le cas, le plus fréquent dans la pratique, d'une transmission à trois rapports de vitesse de marche avant).

La présente invention a pour objet un procédé et un dispositif de régulation d'un groupe motopropulseur qui permettent lors d'un fonctionnement en marche avant sur le mode automatique (position A de l'organe de commande) d'assurer un fonctionnement optimal en fonction d'un critère déterminé, ce critère pouvant être fixe ou variable en fonction du temps.

La présente invention a également pour objet un procédé et un dispositif de régulation d'un groupe motopropulseur comportant des moyens de verrouillage susceptibles de maintenir un rapport de transmission existant à un moment donné, en fonction de certaines conditions et selon les désirs du conducteur afin d'adapter le fonctionnement du groupe motopropulseur aux conditions de la circulation.

L'invention a encore pour objet de perfectionner le dispositif de sélection du mode de fonctionnement de la transmission en permettant au conducteur d'adapter plus rapidement et plus aisément le fonctionnement de la transmission aux conditions de la circulation.

Le procédé de régulation d'un groupe motopropulseur de véhicule automobile comprenant un moteur thermique et une transmission permettant l'établissement de plusieurs rapports de transmission selon l'invention, consiste selon un premier mode de réalisation à déterminer à tout instant un rapport de transmission optimalisé en fonction d'un ou de plusieurs critères déterminés et à engager ce rapport uniquement si le gain résultant par rapport audit critère d'optimalisation est supérieur à une valeur déterminée. Le rapport optimalisé peut en outre n'être engagé que si le régime moteur obtenu est inférieur à un régime maximal déterminé.

Le procédé de régulation d'un groupe motopropulseur de véhicule automobile selon l'invention, adapté à un moteur thermique muni d'un dispositif de commande d'alimentation en carburant consiste, selon un autre mode de réalisation, à détecter à tout instant les variations de la position de l'accélérateur et à maintenir par verrouillage un rapport de transmission existant à un instnt donné lorsque l'enfoncement de l'accélérateur est brusquement diminué d'une quantité supérieure à une valeur déterminée. Selon le procédé de l'invention, on cesse ensuite de maintenir ledit rapport de transmission lorsque l'enfoncement de l'accélérateur est à nouveau augmenté d'une quantité supérieure à une valeur déterminée.

On détecte de préférence à tout instant la position de la pédale d'accélérateur et/ou l'amplitude et la vitesse du mouvement d'enfoncement et de retour de la pédale d'accélérateur pour commander le verrouillage et le déverrouillage du rapport de transmission.

La pédale d'accélérateur constitue selon le procédé de l'invention, une commande de puissance, en fonctionnement normal, automatique, de la transmission. Dans ce but, le dispositif associe, en mode automatique, à tout enfoncement de la pédale d'accélérateur, une puissance à fournir par le moteur thermique. Dans ce mode de fonctionnement, la position de la pédale d'accélérateur ne correpond donc plus de manière biunivoque à la position par exemple du papillon du carburateur ou de tout autre organe équivalent.

Dans les autres modes de fonctionnement au contraire ces positions restent liées par exemple électroniquement.

Dans le dispositif de l'invention, la pédale d'accélérateur du véhicule constitue donc un organe de commande tantôt de la puissance du moteur thermique tantôt de l'alimentation en carburant du moteur thermique.

Le procédé selon l'invention permet également, selon les désirs du conducteur du véhicule, de maintenir par verrouillage un rapport de transmission différent du rapport de transmission optimal déterminé.

Le procédé de l'invention prévoit en outre que l'on puisse, selon les désirs du conducteur du véhicule, rétrograder à un rapport de transmission inférieur si le régime moteur obtenu est inférieur au régime maximal admissible, l'opération de rétrogradation étant suivie par une phase de verrouillage.

Le dispositif de régulation du groupe motopropulseur selon l'invention comprend une unité logique recevant des informations de différents capteurs de l'état du fonctionnement du groupe motopropulseur et du véhicule et agissant par l'intermédiaire d'actionneurs, sur la transmission et le groupe motopropulseur. Le dispositif comprend un organe de sélection permettant l'établissement d'au moins une position stable correspondant au fonctionnement automatique de la transmission en marche avant, position pour laquelle l'unité logique détermine à tout instant le rapport de transmission optimal au sens d'un critère d'optimalisation déterminé. L'unité logique commande l'engagement du rapport de transmission ainsi déterminé, s'il n'est pas déjà engagé, uniquement si le gain résultant par rapport audit critère d'optimalisation est supérieur à la valeur déterminée précitée et si le régime moteur obtenu est inférieur au régime maximal précité.

L'unité logique comprend de préférence un comparateur du régime du moteur thermique par rapport à une valeur limite inférieure dépendant de la position de l'accélérateur et susceptible de commander un actionneur pour commander le maintien par verrouillage du rapport de transmission existant, qui peut être différent du rapport de transmission optimal déterminé. Dans le cas où le régime moteur est inférieur à une valeur limite dépendant de la position de l'accélérateur, l'actionneur précité provoque l'engagement et le maintien par verrouillage du rapport de transmission directement inférieur. L'organe de sélection du dispositif de régulation peut comprendre une position stable de verrouillage qui commande le verrouillage par l'intermédiaire de l'unité logique.

Le dispositif de régulation de l'invention peut également comprendre un capteur de la vitesse et de la position de la pédale d'accélérateur ou de l'amplitude des deux sens du mouvement de la pédale d'accélérateur ou d'un organe équivalent permettant l'alimentation en carburant du moteur thermique. Ce capteur, connecté à l'unité logique, permet à celle-ci, selon l'amplitude et la vitesse du mouvement de retour de la pédale d'accélérateur lorsque le conducteur "lève le pied", de passer en phase de verrouillage c'est-à-dire de maintenir le rapport de transmission existant qui peut être différent d'un rapport de transmission optimal. Ce capteur de la vitesse et de l'amplitude du mouvement d'accélérateur permet également de réaliser, en combinaison avec des moyens de temporisation, l'opération de déverrouillage lorsque le capteur détecte un nouveau mouvement d'enfoncement de la pédale d'accélérateur.

Il est ainsi possible de réduire considérablement la fréquence des interventions du conducteur sur le levier sélecteur. En effet le mode de verrouillage est ainsi obtenu directement par la levée du pied du conducteur à condition que cette levée de pied soit suffisamment rapide et présente une amplitude suffisamment grande. Cette situation se présente par exemple dans le cas où le conducteur relève le pied rapidement en abordant un virage ou une descente sans pour autant souhaiter l'établissement d'un rapport de transmission moins démultiplié qui placerait le véhicule en pseudo-roue libre diminuant ainsi l'effet de frein moteur. Le déverrouillage est ensuite obtenu dès que le conducteur enfonce à nouveau la pédale d'accélérateur d'une quantité supérieure à une valeur déterminée ou après une certaine temporisation, dans le cas où l'enfoncement de la pédale d'accélérateur présente une amplitude plus faible.

L'organe de sélection du dispositif de régulation de l'invention comprend en outre, de préférence, une position instable de rétrogradation permettant au conducteur d'obtenir rapidement l'établissement d'un rapport de transmission inférieur dans la mesure où le régime moteur obtenu le permet c'est-à-dire se trouve être inférieur au régime maximal admissible. La disposition de l'organe de sélection est de préférence telle que cette position instable de rétrogradation soit située au-delà de la position stable de verrouillage de sorte que l'opération de rétrogradation soit suivie de manière automatique d'une phase de verrouillage, le levier de sélection revenant automatiquement en position stable de verrouillage.

L'invention sera mieux comprise à l'étude d'un mode de réalisation particulier décrit à titre d'exemple nullement limitatif et illustré par les dessins et schémas annexés sur lesquels :

la figure 1 représente très schématiquement un groupe moto-propulseur utilisé dans le procédé selon l'invention;

la figure 2 représente très schématiquement les principaux éléments d'un dispositif de régulation selon l'invention;

la figure 3 représente schématiquement la grille d'un levier sélecteur pouvant être utilisé dans un dispositif de régulation selon l'invention; et

les figures 4a, 4b et 4c illustrent un organigramme de détermination du rapport de transmission montrant le fonctionnement des différents éléments d'un dispositif de régulation selon l'invention.

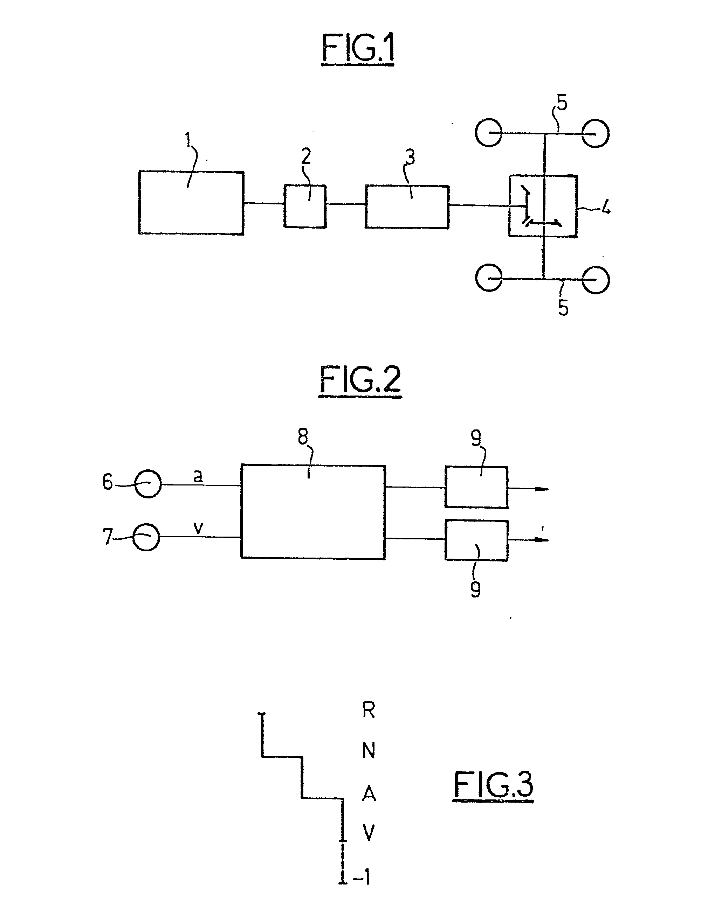

Tel qu'il est représenté sur la figure 1 le groupe motopropulseur est constitué par un moteur thermique 1 relié par l'intermédiaire d'un organe de liaison 2 à une transmission 3 permettant l'établissement de rapports de transmission discrets ou étagés. La sortie de la transmission 3 est reliée à un ensemble 4 réducteur-inverseur-différentiel qui commande les roues 5 du véhicule. Dans l'exemple illustré, la transmission permet l'établissement de rapports discrets et comporte par exemple un rapport de marche arrière et trois rapports de marche avant. L'invention pourrait cependant s'appliquer également à une transmission permettant l'établissement d'un rapport de transmission variable en continu et comportant à cet effet un dispositif variateur. Un changement de rapport de transmission pourrait alors être commandé par le dispositif de régulation de l'invention par l'intermédiaire du variateur et correspondre par exemple à un intervalle déterminé de régime moteur.

Le dispositif de régulation de l'invention comprend un certain nombre de capteurs et en particulier un capteur 6 de l'enfoncement a de la pédale d'accélérateur faisant partie du dispositif d'alimentation en carburant du moteur thermique 1 et un capteur 7 de la vitesse v du véhicule. Le dispositif comprend une unité logique 8 comportant un ensemble d'organes de préférence électroniques réalisant les fonctions nécessaires à l'accomplissement des différentes étapes du procédé de régulation de l'invention. On notera que la réalisation pratique des différents organes électroniques, compte tenu des fonctions désirées, est à la portée de l'homme de l'art disposant de capacités normales dans le domaine électronique.

L'unité logique 8 est reliée par l'intermédiaire d'actionneurs 9 aux différents éléments du groupe motopropulseur représenté sur la figure 1.

Les commandes principales à la disposition du conducteur du véhicule sont constituées par un accélérateur, un frein et un levier sélecteur de marche non représentés sur les figures. Dans le dispositif de régulation selon l'invention, le levier sélecteur de marche de la transmission comprend, par rapport au levier sélecteur classique, une position supplémentaire instable référencée -1 sur la figure 3, et susceptible de commander la rétrogradation de la transmission avec passage au rapport de transmission directement inférieur sous réserve que le régime moteur résultant soit inférieur au régime maximal d'utilisation. Le dispositif de sélection comprend en outre une position stable supplémentaire référencée V sur la figure 3, et commandant le maintien par verrouillage du rapport de transmission existant, c'est-à-dire du rapport de transmission engagé au moment où le conducteur place le levier sélecteur dans la position V.

Le levier sélecteur comporte en outre de manière classique comme on peut le voir sur la figure 3 et dans l'ordre, les positions stables correspondant, à la marche arrière référencée R, au point mort référencé N et au fonctionnement en mode automatique de la transmission référencé A.

Il est donc possible grâce à cette disposition particulière du levier de sélection de maintenir un rapport engagé lorsque les conditions de la circulation le rendent nécessaire selon l'appréciation du conducteur. Par ailleurs, le conducteur peut aisément, à partir de la position de verrouillage V, donner une impulsion sur le levier sélecteur de marche en direction de la position -1 afin d'obtenir le passage du rapport de transmission inférieur, le levier étant ensuite ramené automatiquement en position de verrouillage par tout moyen approprié tel que ressort ou analogue.

Bien entendu, les mêmes résultats pourraient être obtenus au moyen d'une commande indépendante du levier de sélection de marche et en particulier une commande au pied.

Afin de réduire la fréquence des interventions du conducteur sur le levier de sélection, il est également possible, selon un des aspects du procédé et du dispositif de régulation de l'invention, d'obtenir la fonction de verrouillage du rapport engagé, par une action de "lever de pied" d'assez grande amplitude et suffisamment rapide sur la pédale d'accélérateur.

Une telle situation se produit fréquemment par exemple lorsque le conducteur en conduite rapide relève le pied rapidement avant d'aborder un virage ou une descente. L'opération de déverrouillage peut être ensuite obtenue instantanément pour un réenfoncement de la pédale d'accélérateur d'amplitude supérieure à une valeur fixe soit après temporisation pour un réenfoncement de moindre amplitude.

A tout instant le dispositif de régulation du groupe moto-propulseur de l'invention, et en particulier l'unité logique 8, envoie vers les actionneurs 9 des moyens d'alimentation du moteur et de commande du rapport de la transmission, les ordres convenables en fonction des désirs du conducteur et du fonctionnement du groupe moto-propulseur et du véhicule tels que détectés par les capteurs 6 et 7.

Le moteur thermique est caractérisé par une fonction puissance maximale utilisable $P_{mu}(w)$ de la variable que constitue le régime du moteur thermique w. La fonction inverse $w(P_{mu})$ peut également être utilisée. Le moteur est également caractérisé par une fonction définissant l'état des moyens d'alimentation T qui dépend des deux variables que constituent la puissance demandée correspondant à la position de la pédale d'accélérateur a et le régime du moteur thermique w. Le moteur est encore caractérisé par une fonction correspondant au critère d'optimalisation retenu pour la régulation du groupe moto-propulseur. Cette fonction dépend des mêmes deux variables que constituent la puissance demandée ou l'enfoncement de la pédale d'accélérateur a et le régime du moteur thermique w. Si l'on prend par exemple pour critère d'optimalisation la consommation minimale en carburant, on utilisera la fonction que constitue la consommation spécifique CS.

La transmission est quant à elle, caractérisée par le nombre $r_{max}$ de ses rapports de transmission de marche avant r, ainsi que par la valeur k(r) de chaque rapport de marche avant définie comme le rapport entre la vitesse du véhicule v et la vitesse ou régime du moteur thermique w soit k(r)=v/w.

Ces différentes fonctions caractérisant respectivement le moteur thermique et la transmission du groupe moto-propulseur, sont introduites par un certain nombre de valeurs numériques dans la mémoire de l'unité logique 8.

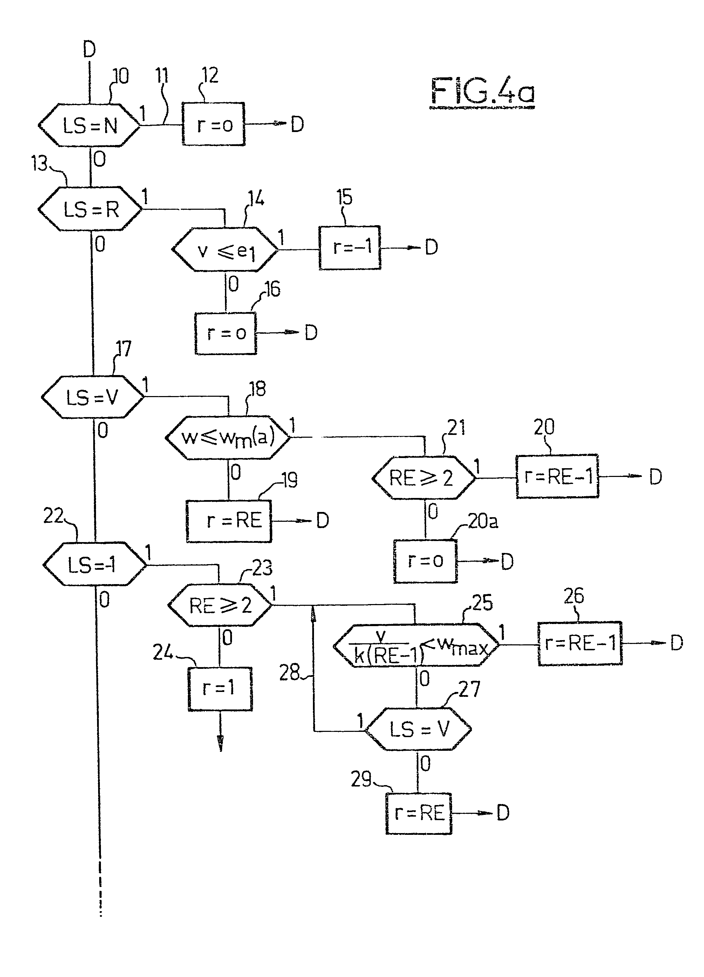

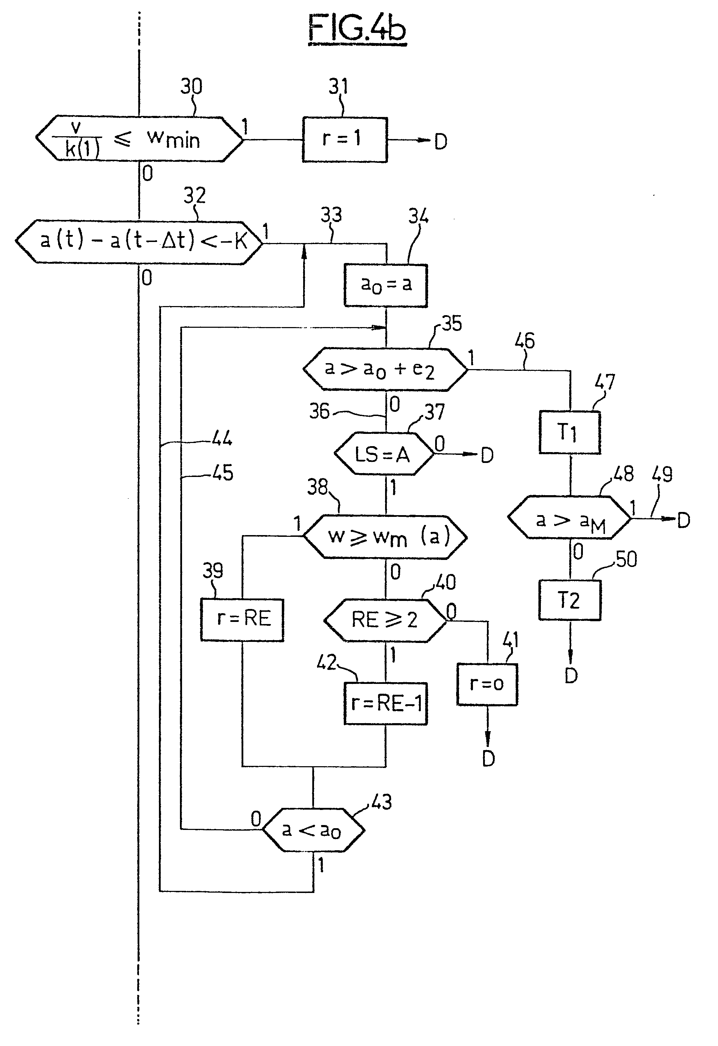

Le fonctionnement de cette unité logique va maintenant être décrit à l'aide d'un exemple de réalisation d'un dispositif de régulation selon l'invention illustré par l'organigramme des figures 4a à 4c.

D'une manière générale le début de l'organigramme est référencé D, une flèche aboutissant à une telle lettre représentant un retour en début d'organigramme. Comme cela est habituel, les différents tests de comparaison, réalisés par des organes comparateurs, sont repérés sous la forme de rectangles à côtés latéraux pointus, tandis que les instructions sont repérés sous la forme de simples rectangles. Le résultat des tests est repéré 1 dans le cas où le test est positif et 0 dans le cas où le test est négatif. Le levier sélecteur du fonctionnement de la transmission est repéré LS et il peut occuper les différentes positions illustrées sur la figure 3.

Sur l'organigramme, r représente le rapport à engager, RE représente le rapport existant ou engagé. La marche arrière est repérée -1, le point mort 0 et les rapports de marche avant 1, 2, 3...; $r_{max}$ correspond au rapport le plus long et $r_{vmax}$ correspond au rapport de transmission qui permet d'atteindre la vitesse maximale du véhicule.

On teste tout d'abord dans le comparateur 10 si le levier sélecteur LS se trouve sur la position de point mort N. Si tel est le cas, une instruction est donnée par la liaison 11 d'avoir à placer la transmission sur le point mort comme repéré par le rectangle 12 (r = 0). Les moyens d'alimentation en carburant du moteur thermique sont alors commandés uniquement par l'enfoncement de la pédale d'accélérateur comme sur un véhicule classique.

Si le levier sélecteur LS ne se trouve par sur la position de point mort, on teste ensuite dans le comparateur 13 si le levier de sélection LS se trouve sur la position marche arrière R. S'il en est ainsi, on teste si la vitesse du véhicule v est suffisamment faible pour éviter d'endommager la transmission. Si dans le comparateur 14 on détermine que la vitesse du véhicule v est effectivement inférieure ou égale à une valeur limite faible $e_1$ constante qui est mémorisée dans l'unité logique 8, l'ordre de passage en marche arrière est fourni par le bloc 15 ($r = -1$). Si au contraire le comparateur 14 détermine que la vitesse du véhicule est supérieure à la valeur limite $e_1$, l'ordre est donné de placer la transmission sur le point mort par le bloc 16 ($r = 0$). Comme précédemment, les moyens d'alimentation du moteur thermique, sont commandés par la pédale d'accélérateur.

On teste ensuite par le comparateur 17, si le levier de sélection LS se trouve sur la position de verrouillage V. Si tel est le cas, il convient de vérifier que le régime du moteur thermique w n'est pas trop bas compte tenu de la position de la pédale d'accélérateur $\underline{a}$. Le comparateur 18 compare donc le régime w à une valeur limite inférieure $w_m(a)$ qui dépend de la position de la pédale d'accélérateur qui est détectée à tout instant par la capteur 6 de la figure 2. Dans le cas où le régime du moteur n'est pas inférieur à cette valeur limite, l'ordre est donné par le bloc 19 de maintenir le rapport de transmission engagé R par verrouillage, rapport existant au moment où le levier de sélection a été placé sur la position V correspondant au verrouillage ($r=RE$). Dans le cas contraire, où le régime w du moteur thermique descend au-dessous de la valeur limite $w_m$, le rapport directement inférieur ($RE-1$) est engagé par le bloc 20 et maintenu verrouillé. On notera que cette instruction dépend du résultat d'une comparaison par le comparateur 21 déterminant si le rapport engagé RE est supérieur ou égal à 2. Dans le cas contraire, le rapport engagé RE est le premier rapport de la transmission et pour éviter le calage du moteur, il convient

**0026470**

de transmettre un ordre de passage au point mort par le bloc 20a soit r = 0. Cette situation se présente lors de l'arrêt du véhicule. Pendant cette phase de verrouillage, les moyens d'alimentation du moteur thermique sont commandés comme précédemment, par l'enfoncement de la pédale d'accélérateur.

On teste ensuite par le comparateur 22, si le levier sélecteur LS a été mis momentanément en position de rétrogradation référencée -1. Si tel est le cas, on vérifie tout d'abord que l'ordre de rétrogradation peut effectivement être réalisé en testant par le comparateur 23 si le rapport engagé est supérieur ou égal à 2. Dans le cas contraire qui correspond au premier rapport de la transmission engagé, on donne l'ordre par le bloc 24 de maintenir le rapport ainsi engagé soit r = 1. Dans le cas où une rétrogradation est possible on vérifie par le comparateur 25 que le régime moteur qui sera obtenu pour le rapport de transmission inférieur ne risque pas de dépasser le régime maximal utilisable $w_{max}$ qui se trouve mémorisé dans l'unité logique 8. On évite ainsi tout surrégime lors du passage au rapport inférieur. Le régime obtenu v/k(RE-1) est défini par le rapport entre la vitesse du véhicule v déterminée par le capteur 7 de la figure 2 et la valeur k du rapport de transmission immédiatement inférieur RE-1. Dans le cas où cette condition est remplie et où on ne risque donc pas un surrégime du moteur thermique, l'ordre est donné par le bloc 26 de rétrograder au rapport de transmission directement inférieur à celui qui était engagé, soit r = RE-1.

Si au contraire le résultat de la comparaison faite par le comparateur 25 montre que la rétrogradation n'est pas possible sans risquer un surrégime, on attend que le régime moteur ait diminué jusqu'à un niveau convenable pour rétrograder. Compte tenu de la position instable du levier sélecteur correspondant à la rétrogradation, le levier sélecteur revient en effet en position de verrouillage immédiatement après l'action du conducteur en vue de la rétrogradation. On teste donc par le comparateur 27 si le levier de sélection se trouve

bien en position de verrouillage V. Si tel est le cas, on revient par la connexion 28 à l'entrée du comparateur 25. L'opération de rétrogradation est alors effectivement réalisée dès qu'elle ne risque plus d'engendrer un surégime pour le moteur thermique.

Dans le cas où le levier de sélection ne se trouverait plus en position de verrouillage à ce moment, on se contente de maintenir le rapport engagé RE par le bloc 20.

Lorsque tous ces tests ont été réalisés et ont tous été négatifs, le levier de sélection ne peut que se trouver dans la position correspondant au mode de fonctionnement automatique qui est référencée A.

Pour éviter tout d'abord d'engager un rapport de transmission trop long dans le cas où la vitesse du véhicule est très faible, par exemple lors du démarrage du véhicule, on teste par le comparateur 30, si le régime maximal possible avec le rapport de transmission le plus court $v/k(1)$, c'est-à-dire avec le premier rapport $r = 1$ est encore inférieur à un régime minimal $w_{min}$ compte tenu de la vitesse du véhicule v déterminée par le capteur 7 de la figure 2. Si tel est le cas, on se trouve effectivement en phase de démarrage où le véhicule se déplace avec une vitesse très faible, de sorte qu'il convient par le bloc 31 de donner l'ordre à la transmission d'engager le rapport de première vitesse $r = 1$. Le comparateur 32, permet d'effectuer un verrouillage du rapport engagé de manière automatique, sans que le conducteur ait besoin d'agir sur le levier de sélection et au moyen d'une simple détection du mouvement de la pédale d'accélérateur. Si le mouvement de levée de pied est suffisamment rapide et d'amplitude suffisante par rapport à une constante prédéterminée K, l'organigramme se poursuit par la liaison 33. On met tout d'abord en mémoire la position $\underline{a}$ de la pédale d'accélérateur à l'instant t. Cette position de la mémoire, est référencée $a_o$ et cette opération est représentée par le bloc 34. On vérifie par le comparateur 35 que la pédale d'accélérateur n'est pas réenfoncée par le conducteur. Si tel est le cas, la valeur instantanée $\underline{a}$ de la position de la pédale d'accélérateur reste inférieure à la valeur mémorisée $a_o$ augmentée d'une faible valeur constante $e_2$, de sorte que l'organigramme se poursuit par la liaison 36 et le comparateur 37, qui vérifie que le levier de sélection est bien resté en position automatique A. Si tel est le cas, il convient encore de tester par le comparateur 38, si le régime moteur w est supérieur à une valeur minimale $w_m(a)$ qui dépend de la position $a$ de la pédale d'accélérateur. On notera que cette comparaison est analogue à celle qui est effectuée par le comparateur 18 lors de la phase de verrouillage commandée par le levier de sélection LS. Comme précédemment, ce test a pour objet d'éviter le fonctionnement du moteur thermique en sous-régime. Si le résultat de ce test est positif, le verrouillage est commandé par le bloc 39 qui maintient le rapport de transmission sur le rapport engagé RE. En cas de sous-régime, le comparateur 40 et les blocs de commande 41 et 42, permettent l'établissement et le maintien du rapport de transmission directement inférieur RE-1, jusqu'au point mort, de la même manière que le comparateur 21 et les blocs de commande 20 et 20a.

Après cette opération de verrouillage, le comparateur 43 détermine si le conducteur a continué à lever le pied, auquel cas la valeur instantanée de la position de la pédale d'accélérateur $a$ est encore inférieure à la valeur mémorisée initialement $a_o$. Il convient donc par la connexion 44, de revenir en amont du bloc de mémorisation 34, de façon à réactualiser la valeur mémorisée $a_o$ en lui donnant la valeur minimale mesurée de la position de la pédale d'accélérateur. Dans le cas contraire, il suffit de revenir par la connexion 45 en amont du comparateur 35. Dans tous les cas, on voit que l'on dispose donc dans la mémoire d'une valeur minimale $a_o$ de la position de la pédale d'accélérateur.

Lorsque le conducteur enfonce à nouveau la pédale d'accélérateur d'une certaine quantité supérieure ou égale à la constante $e_2$, le comparateur 35 engendre un signal par la connexion 46 et après la temporisation $T_1$ du bloc 47, on procède par le comparateur 48 à un test par rapport à une valeur maximale déterminée $a_M$ correspondant à une valeur importante de l'enfoncement de la pédale d'accélérateur. On notera que la temporisation $T_1$ est nécessaire, compte tenu de la vitesse de fonctionnement de l'unité logique, afin d'attendre la fin du mouvement d'enfoncement de la pédale d'accélérateur pour effectuer le test de comparaison dans le comparateur 48. Si le comparateur 48 détermine que l'enfoncement est important, on revient au début de l'organigramme D par la connexion 49, de sorte que le déverrouillage est obtenu. Dans le cas contraire, la pédale d'accélérateur étant enfoncée d'une faible quantité ou lentement, on attend une durée $T_2$ définie par le temporisateur 50 avant de revenir au début de l'organigramme c'est-à-dire avant de procéder au déverrouillage.

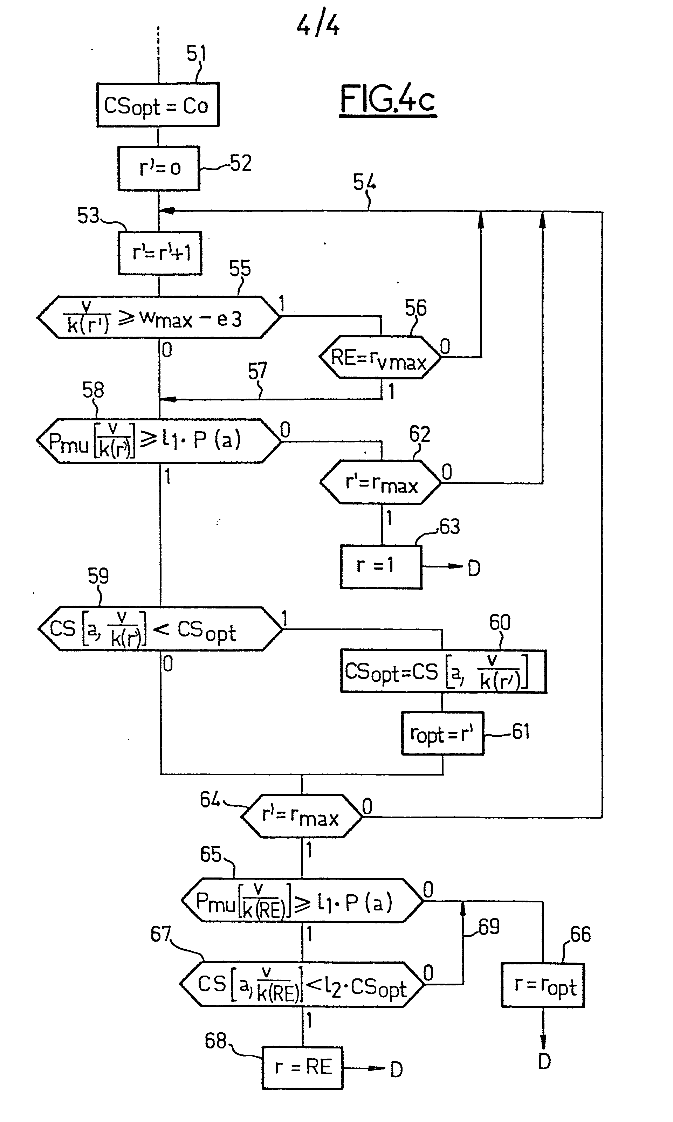

En fonctionnement normal de la transmission, le levier de sélection étant en position automatique A, et le conducteur ne commandant aucun verrouillage par un levier de pied rapide sur la pédale d'accélérateur, le fonctionnement du système est illustré sur la figure 4c qui constitue la suite de l'organigramme des figures précédentes. Un organe de calcul de l'unité logique, a pour première fonction de déterminer le rapport de transmission optimal $r_{opt}$ en fonction du critère d'optimalisation que constitue la consommation spécifique dans l'exemple illustré, soit CS. L'organe de calcul détermine également la valeur optimale $CS_{opt}$ d'une grandeur représentative de ce critère d'optimalisation.

Pour initialiser le fonctionnement de l'organe de calcul, on fixe tout d'abord à une constante déterminée $C_o$ , la valeur optimale $CS_{opt}$ qui représente dans l'exemple illustré la consommation spécifique optimale. Cette opération de mémorisation est effectuée par le bloc 51. Dans le bloc 52 on initialise également la valeur d'une variable r' correspondant à un rapport de transmission, puis par le bloc 53 on incrémente d'une unité ladite variable r' = r' + 1. Cette opération, ainsi que la connexion de retour 54 vont permettre de passer en revue l'ensemble des rapports de transmission possibles de la transmission depuis le rapport le plus court égal à 1 jusqu'au rapport le plus long égal à $r_{max}$ après avoir détermi né pour chacun de ces rapports de transmission si les conditions optimales se trouvent remplies par rapport au critère d'optimalisation déterminé que constitue ici la consommation spécifique CS.

On teste tout d'abord dans le comparateur 55, si le régime v/k(r') que permettrait d'obtenir le rapport de transmission r' n'est pas supérieur au régime maximal $w_{max}$ diminué d'une faible quantité constante $e_3$ afin d'éviter de dépasser un régime proche du régime maximal du moteur thermique, en tout cas pour des rapports de transmission qui ne correspondent pas au rapport de transmission $r_{vmax}$ pour lequel le véhicule peut atteindre sa vitesse maximale. Si en effet, le régime obtenu pour le rapport de transmission r' est supérieu à cette valeur, on teste par le comparateur 56 si le rapport engagé RE est le rapport $r_{vmax}$ permettant la vitesse maximale du véhicule. Si tel est le cas, on revient par la connexion 5 en aval du comparateur 55. Il en résulte que cette valeur du rapport de transmission n'est pas éliminée et reste admissibl malgré le fait que le régime du moteur obtenu est proche du régime maximal. On notera en effet que pour d'autres rapports de transmission, le gain en performance qui résulterait d'un tel régime moteur important serait faible. En outre il convient d'éviter que le dispositif de régulation n'entraîne le passage par un premier rapport de transmission à un régime très élevé puis le retour très rapidement à un autre rapport de transmission à un régime inférieur. Il est au contraire préférable de passer directement à ce même régime inférieur.

On procède ensuite par le comparateur 58, à la comparaison de la puissance maximale utilisable $P_{mu}$ pour le régime correspondant au rapport de transmission étudié r', par rapport à la puissance demandée P(a) multipliée par une constant $l_1$ qui est légèrement inférieure à 1. On notera que cette puissance correspond à la position a de la pédale d'accélérateur, laquelle est en effet, selon l'invention, une commande de puissance en mode de fonctionnement automatique A. Si la puissance qu'il est possible d'obtenir avec le rapport de transmission r' est en effet supérieure ou égale à cette valeur proche de la puissance demandée, il est possible de retenir la valeur r' pour le rapport de transmission à commander. Il convient cependant de tester encore par le comparateur 59 si la consommation spécifique CS qui est le critère retenu à titre d'exemple, et qui est calculé à partir de la valeur de l'enfoncement de la pédale d'accélérateur $a$ mesurée par le capteur 6 d'une part, et du régime du moteur thermique $v/k(r')$ d'autre part, est bien inférieure à la valeur optimale $CS_{opt}$ mise en mémoire initialement par le bloc 52. Si tel est le cas, on met en mémoire par le bloc 60 une nouvelle valeur pour la consommation spécifique optimale qui est précisément celle qui vient d'être calculée pour le rapport de transmission r' et on adopte comme rapport de transmission optimal $r_{opt}$ cette valeur r' par le bloc 61.

Dans le cas où la comparaison faite dans le comparateur 58 est négative, on détermine par le comparateur 62 si le rapport de tranmission r' est déjà le rapport maximal $r_{max}$. Si tel est le cas cela signifie que la vitesse du véhicule est très faible, de sorte qu'il est préférable d'engager le rapport de transmission le plus court, ce qui est fait par le bloc 63 qui place la transmission sur le premier rapport de transmission r = 1.

Le bouclage du système est effectué par le test du comparateur 64 et permet comme on l'a vu l'exploration de tous les rapports de transmission possibles r' pour la détermination du rapport optimal $r_{opt}$ et de la valeur optimale de la grandeur $CS_{opt}$ représentative du critère d'optimalisation tel que la consommation spécifique.

Avant d'engager cependant le rapport de transmission correspondant au rapport optimal $r_{opt}$ qui vient d'être calculé, il convient de déterminer le gain qui serait obtenu par un tel changement du rapport de la tranmission. Pour ce faire, le comparateur 65 examine si la puissance maximale utilisable $P_{mu}$ pour le rapport de transmission engagé R est suffisante par rapport à la puissance demandée par le conducteur P(a) multipliée par le coefficient correcteur $l_1$ peu inférieur à 1. Si cette puissance maximale utilisable ne permet pas de satisfaire la demande du conducteur, il convient effectivement d'engager immédiatement le rapport de transmission optimal $r_{opt}$ ce qui est fait par le bloc de commande 66. Dans le cas contraire, la demande de puissance est déjà satisfaite par le rapport qui se trouve engagé et on détermine par le comparateur 67 dans quelle mesure la grandeur représentative du critère d'optimalisation CS pour le rapport engagé RE est inférieure à la valeur optimale déterminée précédemment $CS_{opt}$ multipliée par un coefficient $l_2$ qui est légèrement supérieur à 1. Si cette valeur représentative, telle que la consommation spécifique, pour le rapport engagé est suffisamment inférieure à la consommation spécifique optimale déterminée, il n'apparait pas nécessaire de modifier le rapport de la transmission étant donné que la puissance demandée est par ailleurs satisfaite. Dans ce cas, le bloc 68 commande le maintien du rapport engagé RE. Si au contraire le résultat de la comparaison par le comparateur 67 montre qu'il est possible d'améliorer le fonctionnement du groupe moto-propulseur dans le sens du critère d'optimalisation choisi, on commande par l'intermédiaire de la liaison 69 et du bloc 66, le changement du rapport de transmission et l'établissement du rapport de transmission optimal précédemment déterminé $r_{opt}$.

Comme on l'a vu, lors du fonctionnement en phase automatique du groupe moto-propulseur, les moyens d'alimentation du moteur sont commandés en fonction de l'enfoncement de la pédale d'accélérateur et de la vitesse du moteur de sorte que la puissance fournie par le moteur est une fonction de l'enfoncement de cette pédale.

Dans le cas du verrouillage automatique au moyen par exemple de la pédale d'accélérateur ou encore au moyen d'un autre organe de commande, qui pourrait par exemple être actionné par le pied gauche inactif du conducteur, les moyens d'alimentation du moteur peuvent être commandés soit en fonction de la position de la pédale d'accélérateur, soit en fonction de l'enfoncement de la pédale d'accélérateur et de la vitesse du moteur.

0026470

Il est préférable par ailleurs de prévoir des moyens susceptibles de n'autoriser le lancement du moteur par le démarreur du véhicule, que lorsque le levier sélecteur est sur la position neutre N. Par ailleurs, il est également avantageux d'associer aux enfoncements nuls de la pédale d'accélérateur (a = o) la position des moyens d'alimentation du moteur correspondant au ralenti, comme sur une véhicule classique. Dans ce cas en effet, on obtient un effet de frein moteur dépendant du régime moteur.

0026470

REVENDICATIONS

1. Procédé de régulation d'un groupe moto-propulseur de véhicule automobile comprenant un moteur thermique et une transmission permettant l'établissement de plusieurs rapports de transmission, caractérisé par le fait qu'on détermine à tout instant un rapport de transmission optimalisé en fonction d'un ou de plusieurs critères déterminés et qu'on engage ce rapport, s'il n'est déjà engagé, uniquement si le gain résultant par rapport audit critère est supérieur à une valeur déterminée,

2. Procédé de régulation selon la revendication 1, caractérisé par le fait que l'on engage le rapport de transmission optimalisé uniquement si le régime moteur obtenu est inférieur à un régime maximal déterminé.

3. Procédé de régulation selon les revendications 1 ou 2, caractérisé par le fait que le critère d'optimalisation est fixe ou variable.

4. Procédé de régulation selon l'une quelconque des revendications précédentes, caractérisé par le fait que selon les désirs du conducteur on maintient par verrouillage un rapport de transmission différent du rapport de transmission optimal ainsi déterminé.

5. Procédé de régulation selon la revendication 4, caractérisé par le fait que le verrouillage est obtenu en détectant l'amplitude et la vitesse du mouvement de retour d'un organe de commande de l'alimentation ou de la puissance du moteur thermique.

6. Procédé de régulation selon la revendication 5, caractérisé par le fait que le déverrouillage est obtenu en détectant l'amplitude d'un nouveau mouvement d'avance dudit organe de commande.

7. Procédé de régulation selon la revendication 6, caractérisé par le fait qu'on procède à une temporisation avant le déverrouillage lorsque l'amplitude du mouvement détecté est inférieure à une valeur limite.

8. Procédé de régulation selon l'une quelconque des revendications 4 à 7, caractérisé par le fait que selon les désirs du conducteur, on rétrograde à un rapport de transmission inférieur si le régime moteur obtenu est inférieur au régime maximal admissible, l'opération de rétrogradation étant suivie par une phase de verrouillage.

9. Procédé de régulation d'un groupe moto-propulseur de véhicule automobile comprenant un moteur thermique muni d'un organe de commande d'alimentation en carburant ou de la puissance fournie et une transmission permettant l'établissement de plusieurs rapports de transmission, caractérisé par le fait que l'on détecte à tout à instant les variations de position de l'organe de commande et qu'on maintient par verrouillage un rapport de transmission existant à un instant donné lorsque la position dudit organe varie rapidement dans un sens d'une quantité déterminée et on cesse de maintenir ledit rapport de transmission lorsque la position dudit organe varie dans l'autre sens d'une quantité déterminée.

10. Procédé de régulation selon la revendication 9, dans lequel la commande d'alimentation ou de puissance se fait au moyen d'une pédale d'accélérateur, caractérisé par le fait qu'on détecte à tout moment l'amplitude et la vitesse du mouvement d'enfoncement et de retour de la pédale d'accélérateur pour commander le verrouillage et le déverrouillage.

11. Dispositif de régulation d'un groupe moto-propulseur de véhicule automobile, comprenant un moteur thermique et une transmission permettant l'établissement de plusieurs rapports de transmission, caractérisé par le fait qu'il comprend une unité logique recevant des informations de capteurs de l'état du fonctionnement du groupe moto-propulseur et du véhicule et agissant par l'intermédiaire d'actionneurs, sur la transmission et le groupe moto-propulseur et un organe de sélection comprenant au moins une position stable (A) pour laquelle l'unité logique détermine à tout instant un rapport de transmission optimalisé en fonction d'un ou de plusieurs critères déterminés et provoque par l'intermédiaire d'un actionneur l'engagement de ce rapport uniquement si le gain résultant par rapport audit critère est supérieur à une valeur déterminée.

22                                                    0026470

12. Dispositif de régulation selon la revendication 11, caractérisé par le fait que l'unité logique comprend un organe de calcul du rapport de transmission optimal en fonction dudit critère et du régime existant pour le moteur thermique, calculant également la valeur optimale d'une grandeur représentative dudit critère; un comparateur de la puissance maximale utilisable pour le rapport de transmission existant par rapport à la puissance demandée par le conducteur; et un comparateur de la grandeur représentative dudit critère pour le rapport de transmission existant et la position existante de la pédale d'accélérateur du moteur thermique par rapport à la valeur optimale précitée de ladite grandeur représentative.

13. Dispositif de régulation selon la revendication 11 ou 12, caractérisé par le fait que l'unité logique comprend un comparateur du régime moteur par rapport à une valeur limite inférieure dépendant de l'enfoncement de la pédale d'accélérateur et susceptible de commander un actionneur pour maintenir par verrouillage un rapport de transmission engagé sauf si le régime moteur est inférieur à une valeur limite dépendant de l'enfoncement de la pédale d'accélérateur, auquel cas le rapport de transmission directement inférieur est engagé et maintenu.

14. Dispositif de régulation selon la revendication 13, caractérisé par le fait que l'organe de sélection comprend une position stable de verrouillage.

15. Dispositif de régulation selon la revendication 13, caractérisé par le fait qu'il comprend un capteur de la vitesse et de l'amplitude des deux sens du mouvement de la pédale d'accélérateur ou d'un organe équivalent d'alimentation du moteur thermique, l'unité logique étant adaptée pour maintenir selon l'amplitude et la vitesse du mouvement de retour, le rapport de transmission engagé.

16. Dispositif de régulation d'un groupe moto-propulseur de véhicule automobile comprenant un moteur thermique et une transmission permettant l'établissement de plusieurs rapports de transmission, et un dispositif de sélection du mode de fonctionnement de la transmission comportant plusieurs positions stables, caractérisé par le fait que le dispositif de sélection comprend en outre une position instable commandant la rétrogradation de la transmission à un rapport de transmission inférieur.

17. Dispositif de régulation selon la revendication 16, caractérisé par le fait que le dispositif de sélection comprend une position stable commandant le maintien par verrouillage du rapport de transmission existant.

18. Dispositif de régulation selon la revendication 17, caractérisé par le fait que le dispositif de sélection comprend successivement les positions stables correspondant à la marche arrière, le point mort, le fonctionnement en mode automatique et le verrouillage, la position instable de rétrogradation étant placée après la position de verrouillage.

## FIG.1

## FIG.2

## FIG.3

FIG.4a

FIG.4b

3/4

0026470

FIG.4c

4/4

0026470